(19) Europäisches Patentamt

European Patent Office

Office européen des brevets

(11) Publication number: **0 298 255 B1**

## EUROPEAN PATENT SPECIFICATION

(45) Date of publication of patent specification: **02.12.92**

(51) Int. Cl.⁵: **G09G 3/36**, H04N 3/12

(21) Application number: **88108828.0**

(22) Date of filing: **01.06.88**

(54) **Circuit for driving a liquid crystal display panel.**

(30) Priority: **04.06.87 JP 140399/87**
**16.05.88 JP 118713/88**

(43) Date of publication of application:
**11.01.89 Bulletin 89/02**

(45) Publication of the grant of the patent:
**02.12.92 Bulletin 92/49**

(84) Designated Contracting States:
**DE FR GB**

(56) References cited:
EP-A- 0 051 521       EP-A- 0 236 198
GB-A- 2 070 308       GB-A- 2 134 302
GB-A- 2 146 479       GB-A- 2 186 414
US-A- 4 180 813

(73) Proprietor: **SEIKO EPSON CORPORATION**
**4-1, Nishishinjuku 2-chome**
**Shinjuku-ku Tokyo-to(JP)**

(72) Inventor: **Uchida, Masahide**
**c/o Seiko Epson Corporation 3-5, Owa**
**3-chome**
**Suwa-shi Nagano-ken(JP)**
Inventor: **Shida, Fumio**
**c/o Seiko Epson Corporation 3-5, Owa**
**3-chome**
**Suwa-shi Nagano-ken(JP)**

(74) Representative: **Blumbach Weser Bergen**
**Kramer Zwirner Hoffmann Patentanwälte**
**Radeckestrasse 43**
**W-8000 München 60(DE)**

## Description

The present invention relates to a circuit for driving a liquid crystal display panel and, more particularly, to a circuit for driving an active-matrix liquid crystal display panel using thin film transistors (TFT) as the active elements.

Active-matrix liquid crystal panels using TFTs have recently been improved so as to be put into practical use as a display panel for pocket TV. At first, liquid crystal display panels became available which were capable of displaying video images with a picture size of 2 inches (diagonal dimension) and a 240 x 220 matrix of picture elements (pixels). As driving systems for such liquid crystal display panels an analogue point at a time system and an analogue line at a time system are known for supplying analogue video signals directly to the liquid crystal display panel.

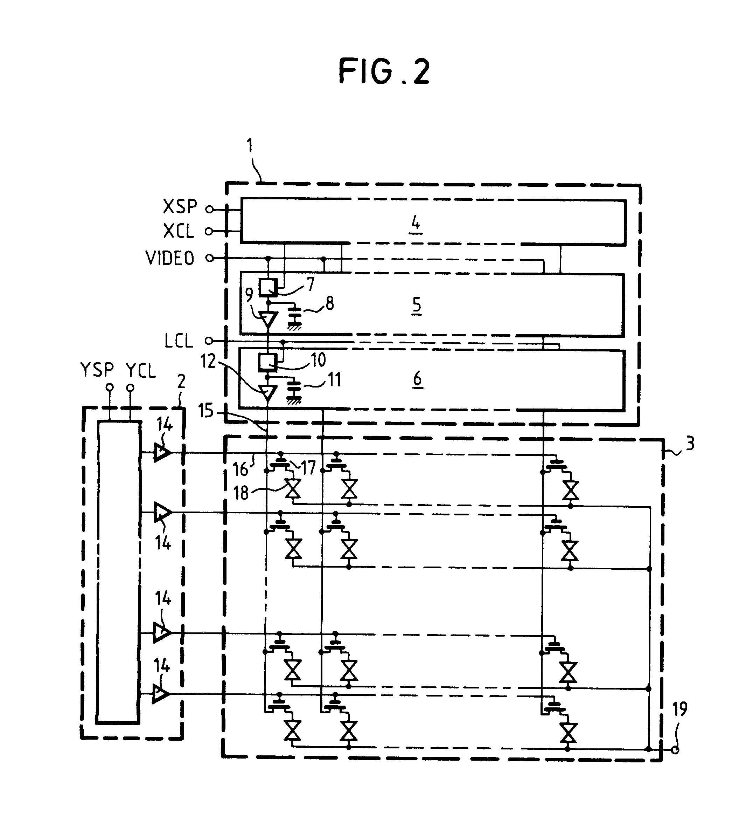

Fig. 2 shows a block diagram corresponding to the analogue line at a time system as it is generally used. This driving system includes an X driver 1, an Y driver 2 and an active-matrix display panel 3. The panel 3 consists of N rows and M columns. The X driver consists of a shift register 4 having M steps and a first group 5 of M sample-and-hold circuits and a second group 6 of M sample-and-hold circuits. Each sample-and-hold circuit of the first group 5 includes an analogue switch 7, a capacitor 8 for holding the sample and a buffer amplifier 9. Each of the sample-and-hold circuits of the second group 6 includes an analogue switch 10, a capacitor 11 for holding the sample and a buffer amplifier 12. Control terminals of the analogue switches 7 are connected to the outputs of respective steps of shift register 4. The control terminals of all M analogue switches 10 are commonly connected to an input terminal to which a latch clock signal LCL is applied. The input terminals of all M analogue switches 7 are commonly connected to an input terminal to which a video signal VIDEO is applied. The input terminals of the analogue switches 10 are respectively connected to the outputs of the buffer amplifiers 9. The outputs of the buffer amplifier 12 are respectively connected to source lines 15, extending in the column direction of the active-matrix liquid crystal panel 3. To shift register 4 are applied a start pulse XSP and a clock signal XCL.

The Y driver 2 includes a shift register 13 having N steps and N buffer amplifiers 14, respectively connected to the outputs of the N steps of the shift register 13. The outputs of the buffer amplifiers 14 are respectively connected to gate lines 16 extending in the row direction of the active-matrix liquid crystal display panel 3.

As already mentioned, the active-matrix liquid crystal display panel 3 includes M source lines 15 arranged in vertical (column) direction, N gate lines 16 arranged in horizontal (row) direction and N x M pixels arranged at the crossing points of the source and a gate lines, each pixel including a pixel thin film transistor 17 for addressing and a liquid crystal element 18 formed by a pixel electrode, a common electrode 19 of the panel and the liquid crystal between them.

During the time when one of the gate lines 16 is selected by shift register 13, i.e. during one horizontal scanning period (hereinafter referred to as 1H), a start pulse XSP is input into the shift register 4 of X driver 1 and is shifted with each pulse of the clock signal XCL. By the output signal of each step of shift register 4, the level of the video signal is latched into the corresponding sample-and-hold circuit of the first group 5. At the end of the 1H period, a latch pulse LCL is supplied to the commonly connected control terminals of the analogue switches 10 and by that the M samples latched in the sample-and-hold circuits of the first group 5, i.e. one scanning line, are transferred at once to the sample-and-hold circuits of the second group 6. During the next 1H period, these samples are charged into the LC elements 18 of a corresponding line of the panel 3 while the sample-and-hold circuits of the first group 5 sample the video signal for the next gate line.

When the prior art explained above is used for a grey scale display, which is a high resolution display, with comparatively few bits of data input, several problems occur. Such problems will be examplified with respect to a construction where digital data are stored in a video RAM (hereinafter referred to as VRAM) and are displayed by means of a digital data process.

When a liquid crystal display panel having a size of for example 5 to 14 inches is used, a substantial increase of the number of pixels is required. With a liquid crystal display panel having N pixels per column and M pixels per row used at a refresh frequency of $f_R$ Hz, the 1H period will be

$$1H = 1 / (N \times f_R) \text{ [sec]}.$$

Therefore, when all steps of the X driver are connected in cascade and the data are sampled by a single clock, the necessary clock frequency $f_{CL}$ is obtained as

$$f_{CL} = M / 1H$$
$$= M \times N \times f_R \quad \text{[Hz]}.$$

For example, when M = 1000, N = 1000 and the refresh frequency $f_R$ = 100 Hz, the clock frequency would have to be

$f_{CL}$ = 100 [MHz].

However, it is difficult to provide a driver IC which can be operated at such a high speed. To cope with this problem, another construction has been suggested where the X driver is subdivided into a plurality of X driver units which are operated in parallel. When the X driver is subdivided into k X driver units to which the data are input in parallel, the clock frequency for each X driver unit is $f_{CL}/k$. Thus, the X driver units need not be operated at such a high speed as mentioned above.

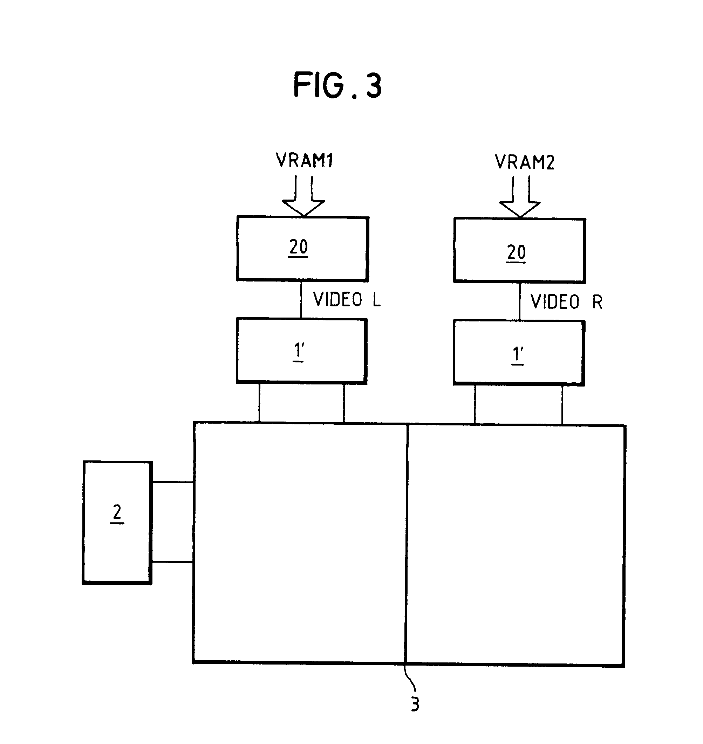

A block diagram of such a system using a subdivided X driver is shown in Fig. 3. In this example two analogue line at a time X driver units 1' are used as the X driver and are connected to an active-matrix display panel 3. The input terminals of each X driver unit 1' are connected to a respective one of two D/A converters 20 which are used to convert the digital data received from two VRAMs VRAM1 and VRAM2 to analogue video signals $VIDEO_L$ and $VIDEO_R$. The necessary clock and control signals are of course applied to the X driver units I' although not shown in the drawing. The Y dirver 2 is connected to the panel 3 in the same manner as shown in Fig. 2. In a construction as shown in Fig. 3 it is necessary to operate the D/A converters 20 at a high speed. Further, when an offset voltage occurs between the analogue outputs of the two D/A converters 20, the contrast ratio of the left half portion of panel 3 will be different from that of the right half portion and further, a vertical line will be perceived at the boundary between the right and the left half portions of panel 3. Thus, this solution is not satisfying.

In another construction, the driver receives a digital input signal of K bits and an external power supply provides $2^K$ different voltage levels. Corresponding to the bit pattern of the digital input signal one of the $2^K$ voltage levels is selected to be applied to a respective source line. If the number of source lines is M, this construction will require a very high number of analogue switches, namely M x $2^K$. In view of this high number of necessary analogue switches, such a circuit is difficult to be put into practical use in view of the chip size and the costs.

A circuit for driving a matrix display device according to the prior art portion of claim 1 is disclosed in the document GB-A-2 070 308. This document mentions a thin film EL element as an example of such a display device. In this prior art the control voltage has a periodic eight-step waveform with each step forming a respective grey scale reference value. The control means produce the control signal for controlling the ON state of the analog switching means such that it becomes ON state at that time at which the respective level of the stepwise changing control voltage corresponds to the input data. The time period of the ON state of the analog switching means is independent from the input data.

It is an object of the present invention to eliminate the above problems of the prior art and to provide a circuit for driving a liquid crystal display panel allowing a superior analogue grey scale display upon the input of a digital video signal with a relatively large liquid crystal display panel having a high number of pixels.

This object is achieved with a circuit for driving a liquid crystal display panel as claimed.

Ways of carrying out the invention are described in detail below with reference to the drawings which illustrate only specific embodiments and in which:

Fig. 1(a)    is a block diagram of an X driver of a circuit for driving a liquid crystal display panel according to the present invention,

Fig. 1(b)    is a timing chart of input and output signals of the X driver shown in Fig. 1(a),

Fig. 1(c)    is a timing chart of input signals to and internal signals of the X driver shown in Fig. 1(a),

Fig. 2    is a block diagram of an analogue line at a time driving circuit,

Fig. 3    is a block diagram of another embodiment of a line at a time driving circuit,

Fig. 4(a)    is a circuit diagram of another embodiment of the present invention,

Fig. 4(b)    is a timing chart for explaining the operation of the circuit shown in Fig. 4(a),

Fig. 5(a)    is a circuit diagram of still another embodiment of the present invention, and

Fig. 5(b)    is a timing chart for explaining the operation of the embodiment shown in Fig. 5(a).

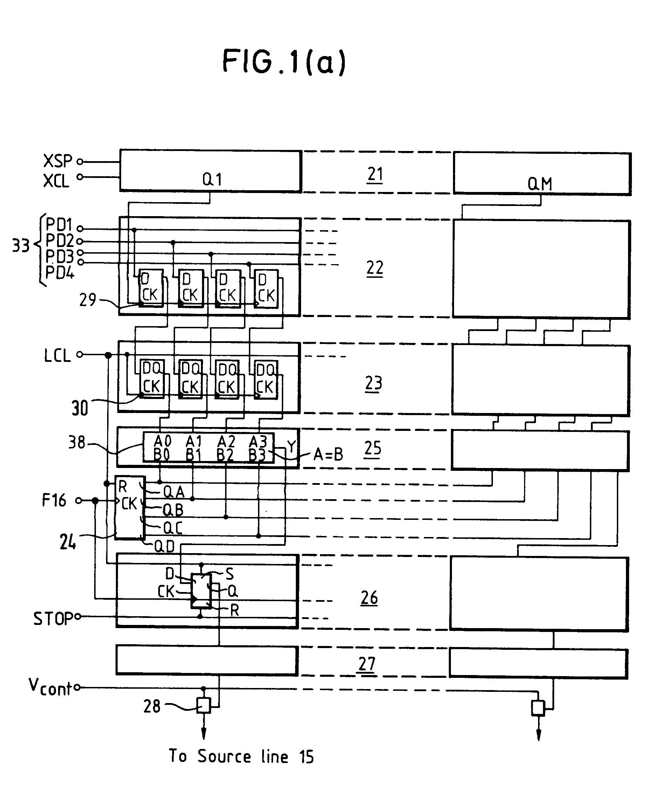

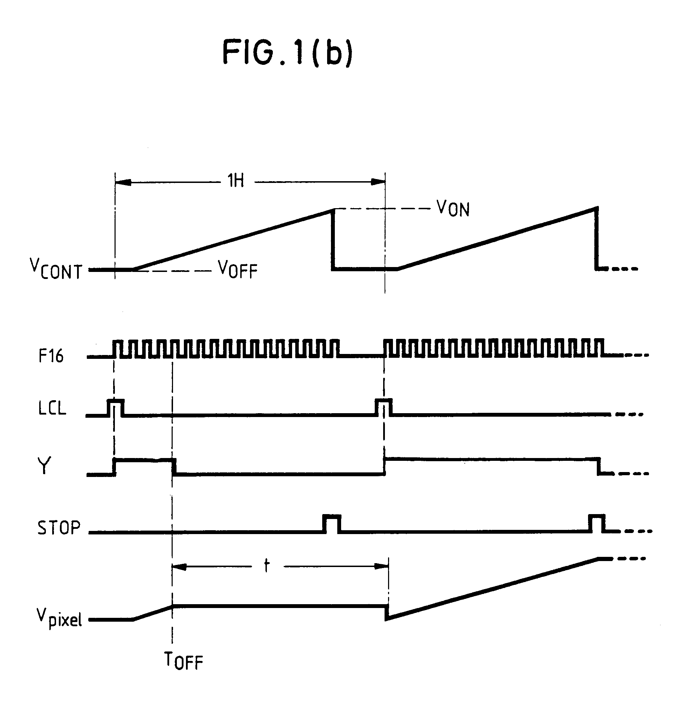

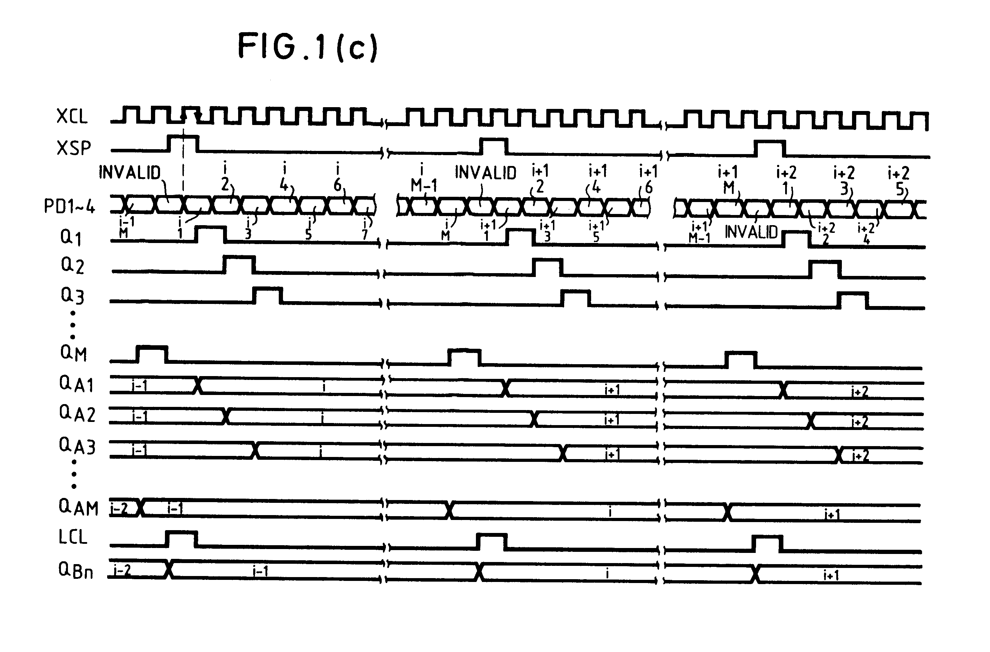

Reference is first made to Fig. 1(a) which shows a block diagram of an X driver of a circuit for dirving a liquid crystal display panel according to one embodiment of the present invention. The X driver shown in Fig. 1(a) comprises a shift register 21, a latch circuit 22, a latch circuit 23, a K bit binary counter 24, comparators 25, D flipflops 26, level shifters 27 and analogue switches 28. K corresponds to the number of bits of the digital data input signal 33 (K = 4 in the present example). Assuming that the liquid crystal display panel (not shown in Fig. 1(a)) has M columns corresponding to M source lines 15, latch circuits 22 and 23 each include M steps. Each step of latch circuit 22 comprises K latch elements 29 and each step of latch circuit 23 comprises K latch elements 30. To shift register 21 a clock signal XCL and a start pulse XSP are supplied as a shift clock input signal and shift data input signal, respectively. Shift register 21 has M steps sequentially outputting output signals $Q_1$ to $Q_M$. The control inputs of the K latch elements 29 of the n-th step of latch circuit 22 are commonly connected to the output $Q_n$ of the n-th step of shift register 21 (n = 1 ... M). Therefore, each step of the latch circuit 22 latches the K = 4 bits of the data input signal 33 (PD1 to PD4) in synchronism with the output $Q_n$ of the corresponding step of shift register 21. The outputs of latch elements 29 are connected to the inputs of respective latch elements 30 of latch circuit 23. The control terminals of all latch elements of latch circuit 23 are commonly connected to a terminal to which a latch clock signal LCL is supplied. Upon the latch clock signal LCL, the data latched by latch circuit 22 are transferred in a lump into latch ciruit 23. The latch clock signal LCL also resets the four bit binary counter 24. Latch clock signal LCL is shown in Fig. 1(b). Binary counter 24 is clocked by a grey scale reference signal F16 also shown in Fig. 1(b). Each of M comparators 25 having K bits have their first inputs A0 to A3 (K = 4 in the present case) connected to the outputs of the latch elements 30 of a corresponding step of latch circuit 23 and their second inputs B0 to B3 connected to the outputs QA to QD of binary counter 24. Thus, the K bit output of each of M steps of latch circuit 23 is compared with the output of counter 24 be means of comparators 25. After having been reset by latch clock signal LCL, the output value of counter 24 is increased step by step with each pulse of the reference signal F16. When a comparator 25 detects conformity of its first and second input signals, it outputs a comparator output signal Y, shown in Fig. 1(b). The comparator output signal Y is input into a corresponding one of D flipflops 26 at the next rising edge of the reference signal F16. D flipflop 26 is set by the latch clock signal LCL and reset by a stop signal STOP. The output voltage of a D flipflop 26 is raised by a corresponding level shifter 27 to the driving voltage of analogue switches 28. A control voltage Vcont is applied to the inputs of analogue switches 28. The control voltage has a saw-tooth like wave form as shown in Fig. 1(b). The lower level $V_{OFF}$ of the control voltage Vcont corresponds to a voltage resulting in the OFF condition of the liquid crystal elements whereas the upper level $V_{ON}$ of the control voltage corresponds to a voltage resulting in the ON condition of the LC elements. The control voltage changes L times from $V_{OFF}$ to $V_{ON}$ during one 1H period. In the present case, L = 1, i.e. the control voltage Vcont has a period of 1H. The analogue switches either connect of disconnect the corresponding source line 15 to or from the input terminal to which the control voltage Vcont is applied.

The signal $V_{pixel}$ shown in Fig. 1(b) is a voltage actually applied to a corresponding LC element 18 (Fig. 2). In Fig. 1(b) $T_{OFF}$ is the time when due to the occurrence of the comparator output signal Y the analogue switch 28 disconnects source line 15 from the Vcont input terminal. After that the voltage is maintained by the capacitance of the source line 15 for a time period t till the next ON state of the analogue switch 28.

Fig. 1(c) shows a timing chart of input signals to and main internal signals of the X driver of the present embodiment. In Fig. 1(c) XCL is the clock signal and XSP the start pulse. $Q_1$, $Q_2$, $Q_3$ ... $Q_M$ are the first step, second step, third step, ... Mth step output signals of shift register 21. The shift register 21 shifts the start pulse XSP in synchronism with the falling edge of the clock signal XCL. PD 1 - 4 is the four bit data input signal 33. The data input signal 33 as shown in Fig. 1(c) is divided into blocks, each block corresponding to the data of one column. The letter i refers to the row number. Thus,

$$\underset{5}{\overset{1}{\underset{\phantom{.}}{\pm}}} 1 \, ,$$

for instance means the data for (i + 1)th row and the fifth column. Latch circuit 22 inputs PD 1 - 4 at the rising edge of $Q_n$ (1≤n≤M) to output $Q_{An}$. $Q_{An}$ ($Q_{A1}$ ... $Q_{AM}$) is the n-th step output signal of latch circuit 22. The latch circuit 23 inputs $Q_{An}$ at the falling edge of latch clock LCL to output $Q_{Bn}$. $Q_{Bn}$ is the n-th step output signal of latch circuit 23. Again the letter i refers to the data of the i-th row.

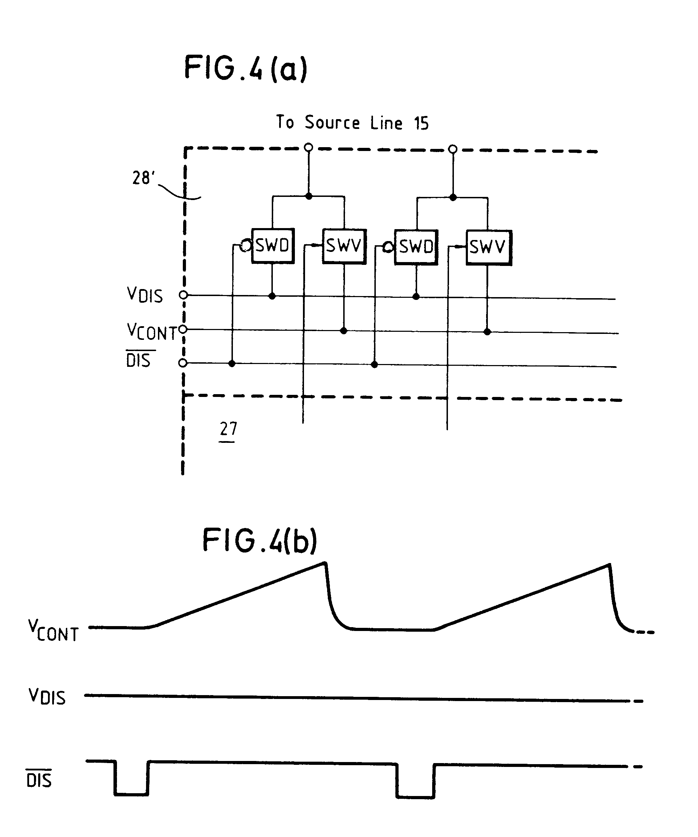

Reference is now made to Fig. 4(a) showing as another embodiment of the present invention a circuit diagram of a switch group 28′ which may be used instead of analogue switches 28 of Fig. 1(a). The switch group 28′ comprises discharging switches SWD and charging switches SWV. $\overline{DIS}$ in Fig. 4(a) is a discharging signal. $V_{DIS}$ is a discharging power supply. In a horizontal scanning period, the source lines 15 having an initial potential are discharged by discharging power supply $V_{DIS}$ having an impedance lower than that of the means supplying the control voltage Vcont. This makes it possible to increase the discharging speed, making the time period t available for charging the signal voltage longer and increasing the charging/discharging ratio of LC elements 18.

Fig. 4(b) is a timing chart showing the wave forms of the signals of Fig. 4(a). Upon the initial input of $\overline{DIS}$ during one horizontal scanning period,

$V_{DIS}$ is selected by all discharging switches SWD so that the potential of all source lines 15 is quickly lowered to the $V_{OFF}$ level.

With this embodiment it is possible to make the time for charging the LC elements longer and, therefore, this construction is more effective for a large-sized liquid crystal display panel having a short horizontal scanning period.

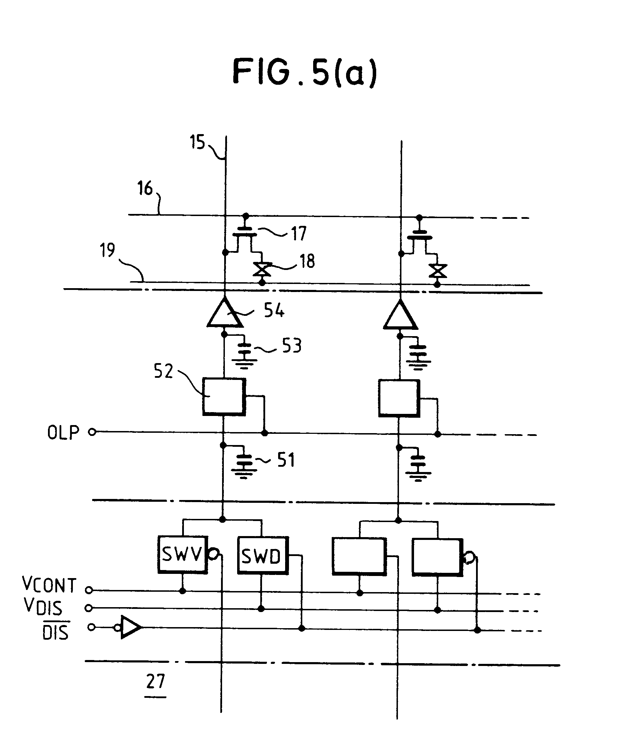

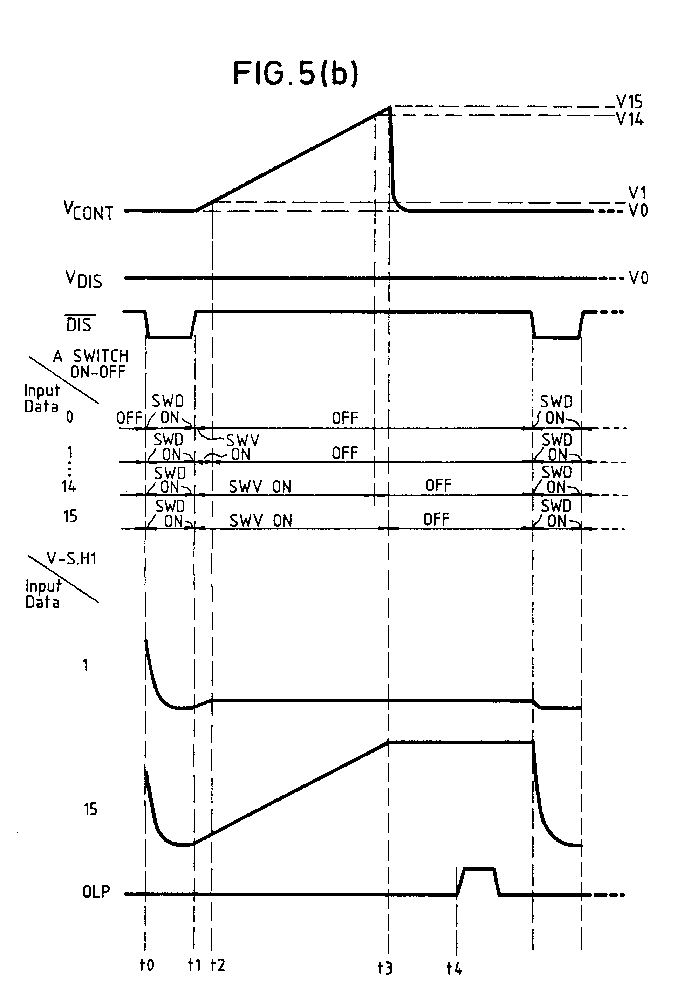

Reference is now made to Fig. 5(a) showing a circuit diagram of still another embodiment of the present invention. In addition to the circuit shown in Fig. 4(a), the circuit of Fig. 5(a) includes a first step sample holder 51, an analogue switch 52, a second step sample holder 53 and an analogue buffer 54 for amplifying the output current of the second sample holder 53 in order to maintain the signals until the next horizontal scanning period.

This embodiment allows to cope with problems that may occur in certain instances with the afore mentioned embodiments according to Figs. 1 and 4. The larger the liquid crystal display panel to be driven is, i.e. the higher the number of pixels is, the higher is the capacitance of each single source line. The higher the capacitance of the source lines is, the more time is needed to charge it to the respective voltages corresponding to the sampled input data signal. With the embodiments according to Figs. 1 and 4, the voltage actually applied to a source line gradually increases from a reset value until the final value determined by the respective sample of the input data signal, as is shown for instance in Fig. 1(b). If the capacitance of the source line is relatively high, the period during which the signal $V_{pixel}$ is applied may not be sufficient to charge this capacitance to the final value of $V_{pixel}$. In the embodiment of Fig. 5, the said changing voltage corresponding to $V_{pixel}$ (actually a voltage corresponding to 1 or 15 in Fig. 5(b)) is applied not directly to the source line but to the first step sample holder 51 instead, shown as a capacitor in Fig. 5(a). With a capacitance of the sample holder appropriately chosen it can be ensured that it is charged up to the final value of the applied signal voltage. In a manner described below, the voltage held by the first step sample holder 51 is then applied during the next 1H period to the respective source line. This means an additional delay of an 1H period between the sampling of the digital input data signal 33 and the actual application of the signal to the source line, but ensures that the full signal voltage is applied to the source line from the beginning of the corresponding 1H period. This makes it possible to extend the time for charging the source lines and the selected LC elements 18 to a full 1H period and, thus, to obtain a more superior display. Fig. 5(b) is a timing chart of signals in the circuit of Fig. 5(a). Shown are the signal Vcont. $V_{DIS}$ and $\overline{DIS}$ which have already

been explained before, and an output latch signal OLP. Further shown are the switch conditions of analogue switches SWV and SWD depending on the value 0 to 15 of the input data signal (still assuming that the input data signal has four bits). V-S.H1 is the voltage of the first step sample holder 51 depending on the input data signal value. V0 to V15 are voltage levels with V0 corresponding to the OFF condition of the liquid crystal elements and V15 corresponding to the ON condition. When the discharging switch SWD is ON, $V_{DIS}$ is selected, and when the charging switch SWV is ON, the signal Vcont is selected. The situation where both switches SWD and SWV are OFF corresponds to a high impedance condition at the input of first step sample holder 51.

At the time t0 in Fig. 5(b) the discharging switches SWD are switched on by the discharging signal $\overline{DIS}$ and the voltage V-S.H1 of the first step sample holders 51 is lowered to V0 as the initial value. At time t1 the discharging switches SWD are switched off and the charging switches SWV are switched in. The voltage V-S.H1 of the first step sample holders 51 starts to increase with the increase of the control voltage Vcont. At time t2 in Fig. 5(b), the charging switch SWV will be switched off if the associated input data signal sample has the value 1. At the time t3 in Fig. 5(b), the charging SWV will be switched off if the associated input data signal sample has the value 15. In other words, the ON time of a charging switch SWV depends on the value of the respective input data signal sample. The voltage V-S.H1 held by the first step sample holder 51 at the time when the charging switch SWV is switched off depends on the duration of the ON period of this charging switch and thus depends on the value of the respective input data signal sample as is clearly seen in Fig. 5(b). When at time t4 in Fig. 5(b) the output latch signal OLP goes HIGH, the analogue switch 52 is turned on. The sampled signal voltage is now applied to the source line 15 after having been amplified by the analogue buffer 54, and the signal voltage is maintained due to the capacitance of the next sample holder 53 until the next horizontal scanning period. In the construction shown in Fig. 1(a) and 4(a), when it is impossible to charge signals in the pixels, the construction additionally including the sample holders and the analogue buffers is required as shown in Fig. 5(a).

As mentioned above, in the circuit for driving an active-matrix liquid crystal display panel according to the present invention, a control voltage is continuously converted L times from a value corresponding to the ON state of the liquid crystal elements to a value corresponding to the OFF state of the liquid crystal elements during one horizontal scanning period. An analogue switch is switched on at the beginning of each horizontal scanning period. After that the corresponding source line is charged until a voltage corresponding to the digital input data signal is reached. Then the analogue switch is turned off. After that the voltage is maintained by the capacitance of the source line and/or an additional sample holder, thereby making it possible to apply to the LC an analogue signal based on a digital input data signal. Therefore, it is easy to provide an interface between several kinds of digital signal processing systems and the circuit according to the present invention. It is not necessary to provide a D/A converter which must be operated at a high speed, nor is it necessary to control an offset voltage as it is the case with the previously explained prior art analogue line at a time X drivers. In the first embodiment of the present invention only one analogue switch is required for each source line which contributes to decrease the costs. Finally, the present invention enables to provide a superior grey scale display and can, therefore, be adapted to several kinds of display devices such as a display device having a high resolution and a device having a display portion of several kinds of meters.

**Claims**

1. A circuit for driving a matrix display device having M rows and N columns by video digital input data consisting of K bits wherein K is an integer at least equal to one, the columns intersecting the rows, a pixel being formed at each intersection of a row and a column said circuit comprising:

    analogue switching means (28; 28') capable of an ON and an OFF state for receiving a control voltage (Vcont) and a control signal and selectively outputting the control voltage to each row, wherein the control voltage varies in level at least between an OFF state of the liquid crystal display and an ON state at least once each horizontal scanning period; and

    control means (21-26) for receiving the K bit digital input data and producing the control signal for controlling the time of commencement of the ON state of the analogue switching means (28; 28') in response to said input data,

    characterized in that said circuit is for driving an active matrix liquid crystal display having a thin film transistor (17) as part of each pixel, that said control voltage varies continuously in level and that said control means (21-26) produces said control signal for controlling the time period of the ON state of the analog switching means (28; 28').

2. The circuit of claim 1, wherein the control means comprises a shift register means (21) for providing a shifted output, at least a portion of the shifted outputs each being associated with a pixel along a row during each horizontal scanning period;

    a plurality of latching means (22, 29; 23, 30) each associated with one of the pixels along a row during each horizontal scanning period for receiving the K bit digital data to provide a latched data signal;

    binary counter means (24) for producing a gray scale reference signal variable in a range substantially corresponding to the range of the K bit digital input data during each cycle of the control voltage; and

    a plurality of comparator means (25, 38) each associated with a latching means for comparing the latched data signal and the gray scale reference signal to produce the control signal.

3. The circuit of claim 2, wherein each of said plurality of latching means includes a first latching means (22, 29) for receiving the K bit digital data and latching the input in response to a shifted output of the shift register means (21) to provide a first latched data signal; and

    a plurality of second latching means (23, 30), each for receiving a common latch clock signal (LCL) and the associated first latched data signal for essentially simultaneously latching all of the first latched data signals of the first latching means to produce in each of the corresponding second latching means a second latched data signal for application to the comparator means (25, 38).

4. The circuit of claim 2 or 3, wherein the analogue switching means includes an analogue switch (28) associated with each said pixel along a row for applying a control voltage to the associated pixel of a level determined by the K bit digital input data.

5. The circuit of claim 2, and including a pluraltiy of flip flop storage means (26) each associated with a comparator means (38) for storing the output of the comparator means at least during each cycle of the control voltage for application to the analogue switching means (28).

6. The circuit of claim 5, and including level shifter means (27) for increasing the level of each of the flip flop storage means (26) for application to the analogue switching means (28).

7. The circuit of claim 3, wherein each of the first and second latching means (22; 23) includes K flip flops (29; 30) which are commonly clocked, one of said flip flops being associated with each of the K data bits.

8. The circuit of claim 1 or 2, wherein the analogue switching means (28') comprises discharging switch means (SWD) for receiving a discharging signal and a discharge power supply input and for selectively applying the discharge power supply input in reponse to the discharging signal to the associated column before the application of the control voltage to the column; and

     a charging switch (SWV) for receiving the control voltage in response to the control signal, said control voltage having a higher impedance than the discharge power supply.

9. The circuit of claim 8, further comprising third latching means (51-53) for receiving the output of the analogue switching means (28, 28') and latching the signal until the following horizontal scanning period.

10. The circuit of claim 9, wherein the third latching means includes a first step sample hold circuit (51) for receiving the output of the analogue switching means (28, 28') and producing a latched sample signal; a second analogue switching means (52) for receiving the latched sample signal and a second step sample hold circuit (53) for receiving the output ON from the second analogue switch for latching the output until the following horizontal scanning period.

11. The circuit of claim 10, and including analogue buffer means (54) between the second step sample hold circuit (53) and the associated column of pixels.

12. The circuit of claim 10, wherein the first and second step sample hold circuits (51, 53) each comprise a capacitor coupled to a reference voltage.

13. The circuit of claim 12, wherein the reference voltage is ground.

14. The circuit of any of claims 1 to 13, wherein the control voltage (Vcont) varies in level by increasing from an OFF state of the liquid crystal display to at least an ON state.

15. A circuit for driving an active-matrix liquid crystal display panel (3) comprising M source lines (15), N gate lines (16), N x M pixels at the crossing points of the source and gate lines, each pixel comprising a thin film transistor (17) having its gate and source connected to the crossing gate and source lines, respectively and having its drain connected to a control electrode of a liquid crystal element (18),

     a first input for receiving a K bit digital input signal,

     a second input for receiving a saw-tooth like periodic control voltage the value of which increases during one period from a first level corresponding to the OFF condition of the liquid crystal elements to a second value corresponding to the ON condition of the liquid crystal elements,

     analogue switches (28; 28'; SWV, SWD) for connecting and disconnecting the second input with the source lines (15), and

     control means (21-27) for controlling the duration of the ON state of the analogue switches in accordance with the digital input signal.

16. A circuit according to claim 15, wherein said control means includes M sample-and-hold circuits (22, 23) for sampling and holding the digital input signal and a signal converter (25, 26) for converting each sampled value of the digital input signal into a corresponding time duration for controlling the duration of the ON state of said analogue switches.

**Patentansprüche**

1. Schaltung zur Ansteuerung einer Matrixanzeigeeinrichtung mit M Zeilen und N Spalten durch digitale Video-Eingangsdaten bestehend aus K Bits wobei K eine ganze Zahl von wenigstens gleich 1 ist, bei der die Spalten die Zeilen schneiden und an jedem Schnittpunkt einer Zeile und einer Spalte ein Pixel gebildet wird, wobei die Schaltung umfaßt:

     eine analoge Schalteinrichtung (28, 28'), die in einen EIN-Zustand und einen AUS-Zustand versetzbar ist und eine Steuerspannung ($V_{CONT}$) und ein Steuersignal empfängt und die Steuerspannung selektiv zu jeder Zeile ausgibt, wobei der Pegel der Steuerspannung wenigstens einmal pro Horizontal-Abtastperiode wenigstens zwischen einem AUS-Zustand der Flüssigkristallanzeige und einem EIN-Zustand variiert, und

     eine Steuereinrichtung (21-26), die die K-Bit digitalen Eingangsdaten empfängt und das Steuersignal zur Steuerung der Zeit des Beginns des EIN-Zustands der analogen Schalteinrichtung (28; 28') in Reaktion auf die Eingangsdaten erzeugt,

     dadurch **gekennzeichnet,** daß die Schaltung zur Ansteuerung einer Aktivmatrix-Flüssigkristallanzeige mit einem Dünnfilmtransistor (17) als Teil jedes Pixels dient, daß der Pegel der Steuerspannung sich kontinuierlich verändert und daß die Steuereinrichtung (21-26) das Steuersignal zur Steuerung der Zeitdauer des EIN-Zustands der analogen Schalteinrichtung (28; 28') erzeugt.

2.    Schaltung nach Anspruch 1, bei der die Steuereinrichtung umfaßt:

eine Schieberegistereinrichtung (21) zur Lieferung eines verschobenen Ausgangssignals, wobei wenigstens ein Teil der verschobenen Ausgangssignale jeweils einem Pixel längs einer Zeile während einer Horizontal-Abtastperiode zugeordnet ist,

eine Vielzahl von Latch-Einrichtungen (22, 29; 23, 30), die jeweils einem der Pixel längs einer Zeile während einer Horizontal-Abtastperiode zugeordnet sind und die K-Bit digitalen Daten zur Lieferung eines zwischengespeicherten Datensignals empfangen,

eine Binärzählereinrichtung (24) zur Erzeugung eines Graustufenbezugssignals, das während jedes Zyklus der Steuerspannung in einem Bereich variabel ist, der im wesentlichen dem Bereich der K-Bit digitalen Eingangsdaten entspricht, und

eine Vielzahl von Komparatoreinrichtungen (25, 38), die jeweils einer Latch-Einrichtung zugeordnet sind, um das zwischengespeicherte Datensignal und das Graustufenbezugssignal zur Erzeugung des Steuersignals zu vergleichen.

3.    Schaltung nach Anspruch 2, bei der jede der Vielzahl von Latch-Einrichtungen eine erste Latch-Einrichtung (22, 29) zum Empfang der K-Bit digitalen Daten und Zwischenspeicherung der Eingabe als Antwort auf ein verschobenes Ausgangssignal der Schieberegistereinrichtung (21) zur Lieferung eines ersten zwischengespeicherten Datensignals, und

eine Vielzahl von zweiten Latch-Einrichtungen (23, 30) umfassen, von denen jede ein gemeinsames Latch-Taktsignal (LCL) und das zugeordnete erste zwischengespeicherte Datensignal empfängt, um im wesentlichen gleichzeitig alle ersten zwischengespeicherten Datensignale der ersten Latch-Einrichtung zwischenzuspeichern und in jeder der entsprechenden zweiten Latch-Einrichtungen ein zweites zwischengespeichertes Datensignal zur Anlage an die Komparatoreinrichtung (25, 38) zu erzeugen.

4.    Schaltung nach Anspruch 2 oder 3, bei der die analoge Schalteinrichtung jedem Pixel längs einer Zeile zugeordnet einen analogen Schalter (28) zum Anlegen einer Steuerspannung eines von den K-Bit digitalen Eingangsdaten bestimmten Pegels an den zugehörigen Pixel aufweist.

5.    Schaltung nach Anspruch 2 mit einer Vielzahl von Flipflop-Speichereinrichtungen (26), von denen jede einer Komparatoreinrichtung (38) zugeordnet ist und das Ausgangssignal der Komparatoreinrichtung wenigstens während jedes Zyklus der Steuerspannung zur Anlage an die analoge Schalteinrichtung (28) speichert.

6.    Schaltung nach Anspruch 5 mit Pegelschiebereinrichtungen (27) zur Erhöhung des Pegels jeder der Flipflop-Speichereinrichtungen (26) zur Anlage an die analoge Schalteinrichtung (28).

7.    Schaltung nach Anspruch 3, bei der jede der ersten und der zweiten Latch-Einrichtungen (22; 23) K Flipflops (29; 30) enthält, die gemeinsam getaktet werden, wobei jedem der K Datenbits eines der Flipflops zugeordnet ist.

8.    Schaltung nach Anspruch 1 oder 2, bei der die analoge Schalteinrichtung (28') eine Entladeschalteinrichtung (SWD) zum Empfang eines Entladesignals und eines Entlade-Stromversorgungseingangs und zum selektiven Anlegen des Entlade-Stromversorgungseingangs als Antwort auf das Entladesignal an die zugeordnete Spalte vor dem Anlegen der Steuerspannung an die Spalte, und

einen Ladeschalter (SWV) zum Empfang der Steuerspannung als Antwort auf das Steuersignal aufweist, wobei die Steuerspannung eine höhere Impedanz als die Entladestromversorgung aufweist.

9.    Schaltung nach Anspruch 8, ferner umfassend eine dritte Latch-Einrichtung (51-53) zum Empfang des Ausgangssignals der analogen Schalteinrichtung (28, 28') und zur Zwischenspeicherung des Signals bis zur folgenden Horizontal-Abtastperiode.

10.   Schaltung nach Anspruch 9, bei der die dritte Latch-Einrichtung eine Abtast-Halteschaltung (51) einer ersten Stufe zum Empfang des Ausgangssignals der analogen Schalteinrichtung (28, 28') und zum Erzeugen eines zwischengespeicherten Abtastsignals, eine zweite analoge Schalteinrichtung (52) zum Empfang des zwischengespeicherten Abtastsignals und eine Abtasthalteschaltung (53) einer zweiten Stufe zum Empfang des Ausgangssignals EIN von dem zweiten Analogschalter zur Zwischenspeicherung des Ausgangssignals bis zur folgenden Horizontal-Abtastperiode aufweist.

11. Schaltung nach Anspruch 10 mit einer analogen Puffereinrichtung (54) zwischen der Abtasthalteschaltung (53) der zweiten Stufe und der zugehörigen Spalte von Pixeln.

12. Schaltung nach Anspruch 10, bei der die Abtasthalteschaltungen (51, 53) der ersten und der zweiten Stufe je einen an eine Bezugsspannung angeschlossenen Kondensator enthalten.

13. Schaltung nach Anspruch 12, bei der die Bezugsspannung Masse ist.

14. Schaltung nach einem der Ansprüche 1 bis 13, bei der der Pegel der Steuerspannung ($V_{CONT}$) sich durch Anstieg von einem AUS-Zustand der Flüssigkristallanzeige bis zu wenigstens einem EIN-Zustand ändert.

15. Schaltung zur Ansteuerung einer Aktivmatrix-Flüssigkristallanzeigetafel (3), umfassend
   M Source-Leitungen (15), N Gate-Leitungen (16), N x M Pixel an den Kreuzungspunkten von Source- und Gate-Leitungen, wobei jeder Pixel einen Dünnfilmtransistor (17) aufweist, dessen Gate und Source mit den sich kreuzenden Gate- bzw. Source-Leitungen verbunden sind und dessen Drain mit einer Steuerelektrode eines Flüssigkristallelemlents (18) verbunden ist,
   einen ersten Eingang zum Empfang eines K-Bit digitalen Eingangssignals,
   einen zweiten Eingang zum Empfang einer sägezahnartigen periodischen Steuerspannung, deren Wert während einer Periode von einem ersten Pegel entsprechend dem AUS-Zustand der Flüssigkristallelemente zu einem zweiten Wert entsprechend dem EIN-Zustand der Flüssigkristallelemente ansteigt,
   analoge Schalter (28; 28'; SWV, SWD) zum Verbinden und Trennen des zweiten Eingangs mit den Source-Leitungen (15) und
   eine Steuereinrichtung (21-27) zur Steuerung der Dauer des EIN-Zustands der analogen Schalter nach Maßgabe des digitalen Eingangssignals.

16. Schaltung nach Anspruch 15, bei der die Steuereinrichtung M Abtast-und-Halte-Schaltungen (22, 23) zum Abtasten und Halten des digitalen Eingangssignals und einen Signalumsetzer (25, 26) zur Umsetzung jedes abgetasteten Werts des digitalen Eingangssignals in eine entsprechende Zeitdauer zur Steuerung der Dauer des EIN-Zustands der analogen Schalter aufweist.

## Revendications

1. Un circuit prévu pour l'attaque d'un dispositif de visualisation matriciel ayant M rangées et N colonnes, par des données d'entrée numériques vidéo comprenant K bits, en désignant par K un entier au moins égal à un, les colonnes formant des intersections avec les rangées, et un pixel étant formé à chaque intersection d'une rangée et d'une colonne, ce circuit comprenant :
   des moyens de commutation analogiques (28; 28') capables de prendre un état conducteur et un état non conducteur, de façon à recevoir une tension de commande ($V_{cont}$) et un signal de commande et à émettre sélectivement la tension de commande vers chaque rangée, le niveau de la tension de commande variant au moins entre celui qui correspond à un état inactif de la visualisation par cristal liquide, et celui qui correspond à un état actif, au moins une fois au cours de chaque période de balayage horizontal; et
   des moyens de commande (21-26) qui sont destinés a recevoir les données d'entrée numériques à K bits et à produire le signal de commande pour commander l'instant du début de l'état conducteur des moyens de commutation analogiques (28; 28') sous la dépendance des données d'entrée,
   caractérisé en ce que ce circuit est prévu pour attaquer un dispositif de visualisation à cristaux liquides et à matrice active, ayant un transistor à couches minces (17) faisant partie de chaque pixel, le niveau de la tension de commande précitée varie continuellement, et les moyens de commande (21-26) produisent le signal de commande de façon à commander la durée de l'état conducteur des moyens de commutation analogiques (28; 28').

2. Le circuit de la revendication 1, dans lequel les moyens de commande comprennent des moyens à registre à décalage (21) qui sont destinés à fournir un signal de sortie décalé, une partie au moins des signaux de sortie décalés étant respectivement associée avec un pixel le long d'une rangée pendant chaque période de balayage horizontal;
   un ensemble de moyens de mémorisation (22, 29; 23, 30), chacun d'eux étant associé à l'un des pixels le long d'une rangée pendant chaque période de balayage horizontal, pour recevoir les données numériques à K bits de façon à fournir un signal de données mémorisé;

des moyens compteurs binaires (24) qui sont destinés à produire un signal de référence d'échelle de gris qui varie dans une plage correspondant pratiquement à la plage des données d'entrée numériques à K bits, pendant chaque cycle de la tension de commande; et

un ensemble de moyens comparateurs (25, 38), chacun d'eux étant associé à un moyen de mémorisation pour comparer le signal de données mémorisé et le signal de référence d'échelle de gris, de façon à produire le signal de commande.

3. Le circuit de la revendication 2, dans lequel chaque moyen de l'ensemble de moyens de mémorisation comprend un premier moyen de mémorisation (22, 29) qui est destiné à recevoir les données numériques à K bits et à mémoriser l'information d'entrée sous la dépendance d'un signal de sortie décalé des moyens à registre à décalage (21), pour fournir un premier signal de données mémorisé; et

un ensemble de seconds moyens de mémorisation (23, 30), chacun d'eux étant destiné à recevoir un signal d'horloge de bascules commun (LCL) et le premier signal de données mémorisé associé, pour mémoriser de façon pratiquement simultanée tous les premiers signaux de données mémorisés du premier moyen de mémorisation, de façon à produire dans chacun des seconds moyens de mémorisation correspondants un second signal de données mémorisé, pour l'application aux moyens comparateurs (25, 38).

4. Le circuit de la revendication 2 ou 3, dans lequel les moyens de commutation analogiques comprennent un élément de commutation analogique (28) associé à chaque pixel le long d'une rangée, pour appliquer au pixel associé une tension de commande ayant un niveau qui est déterminé par les données d'entrée numériques à K bits.

5. Le circuit de la revendication 2, comprenant un ensemble de moyens d'enregistrement à bascules (26), chacun d'eux étant associé à un moyen comparateur (38) pour enregistrer le signal de sortie du moyen comparateur, au moins pendant chaque cycle de la tension de commande, pour l'application aux moyens de commutation analogiques (28).

6. Le circuit de la revendication 5, comprenant des moyens de décalage de niveau (27) qui sont destinés à augmenter le niveau de chacun des moyens d'enregistrement à bascules (26) pour l'application aux moyens de commutation analogiques (28).

7. Le circuit de la revendication 3, dans lequel chacun des premier et second moyens de mémorisation (22; 23) comprend K bascules (29; 30) qui sont attaquées par une horloge commune, et l'une de ces bascules est associée à chacun des K bits de données.

8. Le circuit de la revendication 1 ou 2, dans lequel les moyens de commutation analogiques (28') comprennent un élément de commutation de décharge (SWD) qui est destiné à recevoir un signal de décharge et un signal d'entrée d'une alimentation de décharge, et à appliquer sélectivement le signal d'entrée d'alimentation de décharge à la colonne associée, sous l'effet du signal de décharge, avant l'application de la tension de commande à la colonne; et

un élément de commutation de charge (SWV) qui est destiné à recevoir la tension de commande sous l'effet du signal de commande, cette tension de commande correspondant à une impédance supérieure à celle de l'alimentation de décharge.

9. Le circuit de la revendication 8, comprenant en outre un troisième moyen de mémorisation 51-53 qui est destiné à recevoir le signal de sortie des moyens de commutation analogiques (28, 28'), et à mémoriser le signal jusqu'à la période de balayage horizontal suivante.

10. Le circuit de la revendication 9, dans lequel le troisième moyen de mémorisation comprend un circuit échantillonneur-bloqueur de premier étage (51) qui est destiné à recevoir le signal de sortie des moyens de commutation analogiques (28, 28') et à produire un signal d'échantillon mémorisé; des seconds moyens de commutation analogiques (52) qui sont destinés à recevoir le signal d'échantillon mémorisé et un circuit échantillonneur-bloqueur de second étage (53) qui est destiné à recevoir le signal de sortie provenant des seconds moyens de commutation analogiques à l'état conducteur, pour mémoriser le signal de sortie jusqu'à la période de balayage horizontal suivante.

11. Le circuit de la revendication 10, comprenant des moyens amplificateurs-séparateurs analogiques (54) entre le circuit échantillonneur-bloqueur de second étage (53) et la colonne de pixels associée.

12. Le circuit de la revendication 10, dans lequel chacun des circuits échantillonneurs-bloqueurs de premier étage et de second étage (51, 53) comprend un condensateur connecté à une tension de référence.

13. Le circuit de la revendication 12, dans lequel la tension de référence est la masse.

14. Le circuit de l'une quelconque des revendications 1 à 13, dans lequel le niveau de la tension de commande ($V_{cont}$) augmente lorsqu'on passe d'un état inactif de la visualisation à cristal liquide, à au moins un état actif.

15. Un circuit destiné à l'attaque d'un panneau de visualisation à cristaux liquides à matrice active (3), comprenant M lignes de source (15), N lignes de grille (16), N x M pixels aux points d'intersection des lignes de source et de grille, chaque pixel comprenant un transistor à couches minces (17) dont la grille et la source sont respectivement connectées aux lignes de grille et de source qui se coupent, et dont le drain est connecté à une électrode de commande d'un élément à cristal liquide (18),

une première entrée destinée à recevoir un signal d'entrée numérique à K bits,

une seconde entrée destinée à recevoir une tension de commande périodique en dents de scie dont la valeur augmente pendant une période à partir d'un premier niveau correspondant à l'état inactif des éléments à cristal liquide, jusqu'à un second niveau correspondant à l'état actif des éléments à cristal liquide,

des éléments de commutation analogiques (28, 28'; SWV, SWD) qui sont destinés à connecter et à déconnecter la seconde entrée vis-à-vis des lignes de source (15), et

des moyens de commande (21-27) qui sont destinés à commander la durée de l'état conducteur des éléments de commutation analogiques, conformément au signal d'entrée numérique.

16. Un circuit selon la revendication 15, dans lequel les moyens de commande comprennent M circuits échantillonneurs-bloqueurs (22, 23) qui sont destinés à échantillonner et à bloquer le signal d'entrée numérique, et un convertisseur de signal (25, 26) qui est destiné à convertir chaque valeur échantillonnée du signal d'entrée numérique en une durée correspondante, pour commander la durée de l'état conducteur des éléments de commutation analogiques.

# FIG.1(a)

To Source line 15

# FIG.1(b)

# FIG.1(c)

EP 0 298 255 B1

# FIG.2

# FIG.3

VRAM1

VRAM2

20

20

VIDEO L

VIDEO R

1'

1'

2

3

# FIG.4 (a)

# FIG.4(b)

# FIG. 5(a)

# FIG.5(b)